Europäisches Patentamt

European Patent Office

Office européen des brevets

(19)

(11) Veröffentlichungsnummer: **0 241 644**
**A2**

## (12) EUROPÄISCHE PATENTANMELDUNG

(21) Anmeldenummer: 87100989.0

(22) Anmeldetag: 24.01.87

(51) Int. Cl.4: **H01M 6/16**

(30) Priorität: 03.04.86 DE 3611123

(43) Veröffentlichungstag der Anmeldung:
21.10.87 Patentblatt 87/43

(84) Benannte Vertragsstaaten:
**BE DE FR GB IT**

(71) Anmelder: **VARTA Batterie Aktiengesellschaft
Am Leineufer 51
D-3000 Hannover 21(DE)**

(72) Erfinder: **von Alpen, Ulrich, Dr. Dipl.-Phys.
Im Kastanienhain 5
D-6246 Glashütten 2(DE)**

(74) Vertreter: **Kaiser, Dieter Ralf, Dipl.-Ing.
Gundelhardtstrasse 72
D-6233 Kelkheim/Ts.(DE)**

(54) **Wasserfreier organischer Elektrolyt.**

(57) Galvanische Hochenergiezellen mit negativen Leichtmetallelektroden (Li) enthalten als Elektrolytbestandteil häufig Lösungsmittel, darunter Äther, die aufgrund nachbarständiger Gruppen -0-, $=CO$ oder $=N$-aktivierte C-H-Bindungen aufweisen und zur Bildung explosibler Peroxide neigen. Stabilisator-Zusätze zum Elektrolyten in Mengen von ca. 100 ppm, neben anderen alkylsubstituierten Phenolen namentlich die Substanz 2,6-Di-tert-butyl-4-methylphenol oder leicht oxidierbare schwefel-bzw. phosphororganische Verbindungen wie Trimethylphosphit, verhindern diesen Prozeß und machen eine gefahrlose Handhabung der Zellen auch unter ungewöhnlichen Betriebsbedingungen (z.B. lange Überladung bei hohem Strom) möglich.

EP 0 241 644 A2

## Wasserfreier organischer Elektrolyt

Die Erfindung betrifft einen wasserfreien organischen Elektrolyten für galvanische Elemente mit negativer Leichtmetallelektrode, welcher zumindest ein organisches Lösungsmittel mit einer durch eine Nachbargruppe -0-, =CO oder =N-aktivierten C-H-Bindung enthält.

Lösungsmittel nach der im Gattungsbegriff gegebenen Definition finden sich als Elektrolytbestandteil vor allem in Hochenergiezellen auf Lithiumbasis sehr häufig. Dabei erfolgt ihre Auswahl einerseits unter dem Gesichtspunkt weitestgehender Unempfindlichkeit gegenüber dem stark reagierenden Elektrodenmaterial, andererseits mit Rücksicht auf ein gutes Solvatationsvermögen gegenüber anorganischen Salzen. Die Gruppe der Äther erfüllt diese Forderungen in hohem Maße. Äther werden auch als aprotische Lösungsmittel bezeichnet, weil sie nicht zur Lieferung von Protonen befähigt sind und daher nur schwer mit Alkalimetallen reagieren können. Ihr Verhalten entspricht dem einer Lewis-Base.

Als Beispiele für in Lithiumzellen eingesetzte Äther seien hier genannt: die aliphatischen Monoäther Dimethyläther, Diäthyläther, Diisopropyläther oder n-Buthyläther und von den aliphatischen Polyäthern Diäthylenglycoldimethyläther (DME), Äthylenglycoldiäthyläther oder Tetraäthylenglycoldimethyläther und schließlich cyclische Äther wie Tetrahydrofuran, 1,4-Dioxan und Tetrahydropyran.

Andere Elektrolytlösungsmittel, auf die sich die Anwendung der Erfindung erstreckt, sind z.B. das Butyrolacton und das Acetonitril.

In der Praxis werden meist Mischungen aus mehreren Lösungsmitteln eingesetzt, vor allem dann, wenn man gezwungen ist, etwa zwischen der Aufnahmefähigkeit der Elektrolytflüssigkeit für das Leitsalz und dem Dampfdruckverhalten einen optimalen Kompromiß zu schließen oder eine günstige Viskosität einzustellen, weshalb man beispielsweise einen PC/LiClO$_4$-Elektrolyten mit DME verdünnt.

Die gelockerte C-H-Bindung bei den hier infrage stehenden organischen Flüssigkeiten macht diese empfänglich für die Aufnahme von Sauerstoff. Besonders ausgeprägt ist bei den Äthern die Neigung, sich zu nichtflüchtigem Peroxid zu oxidieren. Die damit verbundene Explosionsgefahr hat sich neuerdings als großes Hemmnis beim Umgang mit ätherhaltigen Hochenergiezellen erwiesen.

Äther-Peroxide bilden sich gewöhnlich aus Hydroperoxid, welches in einer ersten Stufe durch Aufspaltung einer C-H-Bindung neben der Sauerstoffbrücke des Äthermoleküls und O$_2$-Einlagerung entsteht und nachfolgend in ein wenig stabiles Alkylperoxid-Radikal und einen Alkohol zerfällt.

Über einen Radikalkettenmechanismus vereinigen sich darauf die Alkylperoxid-Radikale zu entsprechenden Peroxid-Polymeren. Aus peroxidhaltigen Äthern lassen sich daher sowohl Hydroperoxid-Monomere als auch Alkylidenperoxid-Polymere nebeneinander isolieren.

Einschlägige Erfahrungen mit bombierten Lithiumzellen sowohl auf dem Prüfstand als auch während des Einsatzes haben gelehrt, daß Oxidationsprozesse der beschriebenen Art offensichtlich auch in den Zellen, trotz hermetischer Abdichtung gegen die Außenluft, ablaufen.

Geringfügige Mengen an Sauerstoff können in der Zelle durch Zersetzung von sauerstoffhaltigen Verbindungen wie LiClO$_4$, CrO$_x$, MnO$_2$ oder aus H$_2$0-Resten des nicht vollständig entwässerten Lösungsmittels durch Elektrolyse gebildet werden. Auch ist ein Einschleppen von Peroxid, das bereits bei der Äther-Reinigung durch Destillation entstanden ist, in die Zelle möglich. Zur Auslösung einer Explosion des Peroxids bedarf es dann nur noch einer unbeabsichtigten Energiezufuhr, die z.B. durch einen Kurzschluß mit folgender Überhitzung der Zelle oder durch Lichteinwirkung auftreten kann.

Bisher bekannte Maßnahmen des Explosionsschutzes zielten, ohne spezielle Bezogenheit auf das vorliegende elektrochemische System, darauf ab, eine drohende Bombierung der Zelle durch vorzeitige Stromunterbrechung, z.B. mittels eines leicht schmelzenden Leiterstücks, entweder ganz abzuwenden oder mit mechanischen Vorkehrungen die Brisanz einer Explosion und damit die Zerstörungskraft zu mildern. Letzteres läßt sich z.B. durch Ventilkonstruktionen erreichen, bei denen im Bereich des Zellendeckels eine deformierbare Kugel in einer angepaßten Öffnung dichtend gehaltert ist, bei Überschreiten eines höchstzulässigen Innendrucks sich jedoch irreversibel verformt und einen Öffnungsspalt freigibt.

Der Erfindung liegt die Aufgabe zugrunde, Maßnahmen anzugeben, mit denen die unmittelbar von einem Elektrolyten gemäß dem eingangs formulierten Gattungsbegriff ausgehende Explosionsgefahr für Lithiumbatterien eingedämmt werden kann.

Die Aufgabe wird erfindungsgemäß dadurch gelöst, daß dem Elektrolyten eine Stabilisatorsubstanz zugesetzt ist, die die Bildung von polymeren Peroxiden verhindert oder vorhandene Peroxide zersetzt.

Besonders wirksame Mittel gegen chemische Veränderungen der fraglichen Lösungsmittel sind substituierte Phenole, vorzugsweise alkylsubstituierte Phenole, aus der nachstehend genannten Gruppe:
2,6 Di-tert-butyl-4-methyl-phenol, 2,4,6, Tri-tert.butyl-phenol, 2,2'-Methylen-bis-(4-methyl-6-tert.butyl-phenol, 2,2'-Isobutyliden-bis-(4,6-dimethyl-phenol), 4,4'-Butyliden-bis-(2-tert-butyl-5-methyl-phenol), 4,4'-Thio-bis-(2-tert-bis-(2-tert.butyl-5-methyl-phenol).

Dazu zählen ferner Mehrkernphenole, die sterisch gehindert sind, sowie Gemische aus sterisch gehinderten styrolisierten Phenolen.

Neben den genannten Phenolabkömmlingen zeigt auch ein Chinolinderivat, das 2, 2, 4-Trimethyl-1, 2 - dihydrochinolin, in polymerisierter Form eine positive Wirkung im Sinne eines Explosionsaufschubs.

Die meisten dieser Produkte lassen sich pauschal auch als Methylphenol-Derivate auffassen. Durch weitere Substituenten sind jedoch alle diese Phenole mehr oder weniger sterisch gehindert, was bedeutet, daß sie stabiler sind als nicht substituierte Phenole und sich weniger leicht als diese oxidieren lassen. Daraus folgt wiederum, was auch im Rahmen der Erfindung wichtig ist, eine geringe Reaktionsbereitschaft gegenüber der Lithiumelektrode.

Insgesamt lassen sich die genannten substituierten Phenole auch unter der Bezeichnung "Phenolische Antioxidantien" zusammenfassen. Dabei ist allerdings noch nichts ausgesagt über den speziellen Mechanismus, nach welchem sie in das Reaktionsgeschehen der Zelle eingreifen und in dem einen oder anderen Fall die Gefahr einer Ätherperoxidexplosion abwenden.

Eine andere, für die Stabilisierung des Elektrolyten sehr geeignete Substanzgruppe umfaßt niederwertige schwefel-oder phosphororganische Verbindungen, die leichter oxidierbar und insofern weniger stabil als die substituierten Phenole sind. Ihre Wirkungsweise als Antioxidans ist darum aber umso einleuchtender. Erfindungsgemäße Vertreter aus dieser Gruppe sind das 4,4'-Thio-bis-(2-tert.butyl-5-methyl-phenol), Trimethylphosphit, Triphenylphosphit und Tris-nonylphenyl-phosphit.

Sinngemäß bilden die phosphorhaltigen Vertreter unter sich eine Gruppe, die mit "Phosphitische Antioxidantien" überschrieben werden kann. Die Thioverbindung 4,4'-Thio-bis-(2-tert-butyl-5-methyl-phenol) ist ein erfindungsgemäßes Beispiel sowohl für die erstgenannte Gruppe substituierter Phenole als auch für die obenerwähnte Gruppe der S-und P-Verbindungen.

Eine weitere erfindungsgemäße Stabilisatorsubstanz ist schließlich das Tetracyanoäthylen.

Die Anwendungskonzentration erfindungsgemäßer Stabilisatoren sollte im Bereich zwischen 10 mg bis 10 g/kg Lösungsmittel, vorzugsweise bei 100 mg/kg Lösungsmittel (= 100 ppm) liegen.

In verschiedenen Testreihen wurden frische Lithiumzellen der Nennkapazität 1 Ah mit dem Elektrolytsystem Diätylenglycoldimethyläther/Propylencarbonat/LiClO$_4$ and mit Cr O$_x$ als Depolarisatormasse nach Zugabe von 2,6-Di-tertiärbutyl-4-methylphenol zum Elektrolyten in einer Menge von 100 mg /1000 g Lösungsmittel mit einem Strom von 100 mA (ca. 10stündig) überladen. Dabei ergab sich, daß eine Überladung über 18 h hinweg bei einer Ladespannung von 40 Volt ohne Beanstandungen durchführbar ist, während die gleichen Zellen ohne diesen Zusatz bereits nach 30 min. wegen Bombierung aus dem Versuch genommen werden mußten.

Bei auf 24 Volt bzw. 12 Volt heruntergestuften Ladespannungen zeigten frische Lithiumzellen im Überladeversuch bis zu 144 h Dauer keine Ausfälle durch Explosionen, dagegen vereinzelt solche Zellen, die vorher zu 30% entladen gewesen waren. Ihr Anteil an den entsprechenden Versuchschargen betrug nur 10%. Bei einer Ladespannung von 6 Volt, die in der Praxis üblich ist, wurde überhaupt keine Explosionsgefährdung festgestellt. Diese Befunde besagen, daß gegenüber nichtstabilisierten Zellen eine Verlängerung der Ladezeit um mehr als den Faktor 10 möglich ist.

Ferner wurde bei den mit Stabilisator versehenen Zellen keine Veränderung der Elektrolytleitfähigkeit bei Raumtemperatur und keine verminderte Kapazitätsausnutzung gefunden.

Aufgrund dieser Ergebnisse sowie weiterer Versuchsbefunde mit anderen Anwendungskonzentrationen des Zusatzes sind erfindungsgemäße Stabilisatorsubstanzen allgemein durch die im kennzeichnenden Teil des Anspruchs 1 angegebene Wirkungsweise charakterisiert, die dafür sorgt, daß auch außerhalb normaler Betriebszustände keine akute Explosionsgefahr für die Hochenergiezellen besteht.

Der Chemismus ihrer Wirkungsweise ist hierbei von untergeordneter Bedeutung. Es darf jedoch vermutet werden, daß unter den erfindungsgemäßen Stabilisatorsubstanzen solche existieren, die Radikale zu bilden vermögen, welche stabiler sind als die in der Einleitung erwähnten, aus Äther-Hydroperoxiden hervorgehenden Alkylperoxid-Radikale. Sicher ist dies bei den substituierten Phenolen, etwa dem 2,6-Di-tert-butyl-4-methyl-phenol, der Fall. Indem sich nun deren Stabilere Radikale in die Radikalkette der Ätherperoxidpolymerisation, einschalten, bewirken sie aufgrund ihrer Stabilität deren sofortigen Abbruch. Das explosible Peroxidpolymer kommt nicht zustande. Die Stabilisatorsubstanz fungiert als Radikalinhibitor oder "Radikalfänger".

Die Stabilisatorsubstanz kann aber durch ihre bloße Gegenwart eine Zersetzung des primär gebildeten Hydroperoxids oder sonst vorhandenen Peroxids bewirken. Die Weiterreaktion zum Peroxid-Polymer ist damit von vornherein abgeblockt und die Explosionsgefahr eliminiert. Die Stabilisatorsubstanz fungiert, ohne sich selbst zu verändern, als Zersetzungskatalysator. In diesem Sinne dürften vorwiegend die phosphitischen Antoxidantien wirken, während dem 4,4'-Thio-bis-(2-tert-butyl-5-methyl-phenol) wegen seiner Doppelnatur als Methylphenol-Derivat einerseits und als niederwertige Thioverbindung andererseits eine Doppelrolle sowohl als Radikalfänger wie als Peroxidzersetzer zukommt.

**Ansprüche**

1. Wasserfreier organischer Elektrolyt für galvanische Elemente mit negativer Leichtmetallelektrode, welcher zumindest ein organisches Lösungsmittel mit einer durch eine Nachbargruppe -O-, = CO oder = N-aktivierten CH-Bindung enthält, dadurch gekennzeichnet, daß dem Elektrolyten eine Stabilisatorsubstanz zugesetzt ist, die die Bildung von polymeren Peroxiden verhindert oder vorhandene Peroxide zersetzt.

2. Elektrolyt nach Anspruch 1, dadurch gekennzeichnet, daß die Stabilisatorsubstanz ein substituiertes Phenol ist.

3. Elektrolyt nach Anspruch 2, dadurch gekennzeichnet, daß die Stabilisatorsubstanz ein alkylsubstituiertes Phenol, ausgewählt aus der Gruppe 2,6-Di-tert.butyl-4-methyl-phenol, 2, 4, 6 Tri-tert. butyl-phenol, 2,2'-Methylen-bis-(4-methyl-6-tert.butyl-phenol), 2,2'-Isobutyliden-bis-(4,6-dimethyl-phenol, 4,4'-Butyliden-bis-(2-tert.butyl-5-methyl-phenol), 4,4'-Thio-bis (2-tert.butyl-5-methyl-phenol), ferner ein sterisch gehindertes Mehrkernphenol oder ein Gemisch sterisch gehinderter, styrolisierter Phenole ist.

4. Elektrolyt nach Anspruch 1, dadurch gekennzeichnet, daß die Stabilisatorsubstanz eine niederwertige schwefel-oder phosphororganische Verbindung von leichter Oxidierbarkeit ist.

5. Elektrolyt nach Anspruch 4, dadurch gekennzeichnet, daß die Stabilisatorsubstanz aus der Gruppe 4,4'-Thio-bis-(2-tert.butyl-5-methyl-phenol), Trimethylphosphit, Triphenylphosphit, Tris-nonylphenyl-phosphit ausgewählt ist.

6. Elektrolyt nach Anspruch 1, dadurch gekennzeichnet, daß die Sabilisatorsubstanz Tetracyanoäthylen ist.

7. Elektrolyt nach einem der Ansprüche 1 bis 6, dadurch gekennzeichnet, daß die Menge der eingesetzten Stabilisatorsubstanz 10 mg bis 1000 mg/kg Lösungsmittel, vorzugsweise ca. 100 mg/kg Lösungsmittel beträgt.